# EUROPÄISCHE PATENTANMELDUNG

(11) **EP 2 233 894 A2**
(43) Veröffentlichungstag der Anmeldung: **29.09.2010**
(21) Anmeldenummer: 10002005.6
(22) Anmeldetag: 26.02.2010
(51) Int. Cl.: G01D 5/48

(54) **Bewegungsvorrichtung mit Wellenleiter zur Positionsbestimmung**

(30) Priorität: 28.03.2009 DE 102009015465
(71) Anmelder: Robert Bosch GmbH, 70469 Stuttgart (DE)
(72) Erfinder: Roßteuscher, Heinz, 97525 Schwebheim (DE); Dorn, Stefan, 97450 Arnstein (DE); Dirschbacher, Josef, 97478 Knetzgau-Hainert (DE); Reusing, Günter, 97464 Niederwerrn (DE); Maiß, Harald, 97525 Schwebheim (DE); Seidel, Jürgen, 73728 Esslingen (DE); Schulteis, Stephan, 71263 Weil Der stadt (DE); Hasch, Jürgen, 70195 Stuttgart (DE); Waldschmidt, Christian, 70197 Stuttgart (DE)
(74) Vertreter: Maiß, Harald

(57) **Zusammenfassung**

Die Erfindung betrifft eine Bewegungsvorrichtung (10a) mit einer Basis (30) und einem Läufer, der entlang einer vorgegebenen Bahn an der Basis (30) beweglich geführt ist, wobei an der Basis (30) ein langgestreckter Messwellenleiter (50) vorgesehen ist, der eine elektromagnetische Welle geführt leiten kann, wobei der Messwellenleiter (50) entlang der Bahn verläuft und wobei an dem Läufer wenigstens ein Störmittel (22) vorgesehen ist, welches die elektromagnetische Welle in dem Messwellenleiter (50) so beeinflussen kann, dass sie im Bereich des Störmittels (22) wenigstens teilweise reflektiert wird.

Erfindungsgemäß umfasst der Messwellenleiter (50) einen ersten und einen zweiten langgestreckten elektrischen Leiter (51; 52), die unter Zwischenschaltung eines Dielektrikums (54) voneinander getrennt sind.

## Beschreibung

Die Erfindung betrifft eine Bewegungsvorrichtung gemäß dem Oberbegriff von Anspruch 1.

Aus der DE 10 2004 057 769 A1 ist eine Bewegungsvorrichtung in Form eines Pneumatikzylinders bekannt. Gemäß der Fig. 3 der DE 10 2004 057 769 A1 umfasst die Bewegungsvorrichtung eine Basis in Form eines Zylinders mit einem Zylinderdeckel 1. In der Basis ist ein Läufer in Form eines Kolbens mit einer Kolbenstange beweglich aufgenommen. Der Läufer wird durch die Zylinderbohrung in der Basis auf einer geradlinigen Bahn geführt. In der Basis ist weiter ein langgestreckter Messwellenleiter vorgesehen, der sich entlang der Bahn des Läufers erstreckt. Der Messwellenleiter wird von einem Ferritmaterial 6 gebildet, das von der elektrisch leitfähigen Basis umschlossen ist, so dass der Messwellenleiter transversale elektromagnetische Wellen (TEM-Wellen) leiten kann. An dem Läufer ist weiter ein Störmittel in Form eines Permanentmagneten vorgesehen, welches eine Reflektionsstelle für die TEM-Welle in dem Messwellenleiter bildet. Hierbei wird ausgenutzt, dass sich das elektromagnetische Feld der TEM-Welle und das magnetische Feld des Permanentmagneten überlagern, so dass das Summenfeld eine Störung aufweist. An dieser Störung wird ein Teil der Energie der TEM-Welle zur Einspeisestelle 3 zurück reflektiert.

Mit dieser Anordnung kann die Entfernung zwischen der Einspeisestelle und Störstelle bestimmt werden. Hierbei kommen vorzugsweise zwei oder mehr ununterbrochen ausgesendete TEM-Wellen mit unterschiedlicher Wellenlänge zum Einsatz, so dass der mögliche Messweg nicht durch die Wellenlänge der TEM-Welle begrenzt ist. Ein entsprechendes Auswerteverfahren ist aus dem Buch "Einführung in die Radartechnik" von Bernhard Huder (ISBN 3-519-06261-5); Abschnitt 3.4, bekannt.

Dieses vorstehende Messprinzip ist nicht auf gerade Bahnen beschränkt, vielmehr kann die Positionsbestimmung an beliebig gekrümmten Bahnen vorgenommen werden, solange nur der Messwellenleiter entlang der Bahn angeordnet werden kann.

Der Nachteil der bekannten Bewegungsvorrichtung besteht in der verhältnismäßig großen Querabmessung des Wellenleiters. Diese wird bestimmt durch die Wellenlänge der verwendeten TEM-Welle, deren Frequenz beispielsweise etwa 77 GHz oder etwa 120 GHz beträgt. Hieraus ergibt sich für den Wellenleiter eine notwendige Querabmessung von etwa 2 mm. Ein derartiger Wellenleiter lässt sich auf Bewegungsvorrichtungen in Form von Linearwälzlagem oft nicht anbringen, da der notwendige Bauraum nicht zur Verfügung steht.

Ein Linearwälzlager ist beispielsweise aus der EP 0 769 627 B1 bekannt. Es umfasst eine sich in eine Längsrichtung erstreckende Führungsschiene als Basis, auf der ein Führungswagen als Läufer über mehrere Reihen von endlos umlaufenden Wälzkörpern längsbeweglich gelagert ist. Das Linearwälzlager der EP 0 769 627 B1 besitzt hierbei besonders geringe Bauabmessungen, die Breite der Führungsschiene kann beispielsweise 5 mm oder weniger betragen. Bei einer derart kleinen Führungsschiene ist es nicht möglich, den aus der DE 10 2004 057 769 A1 bekannten Wellenleiter zwecks Wegmessung einzubauen.

Die Aufgabe der Erfindung besteht darin, eine Bewegungsvorrichtung anzugeben, deren Messwellenleiter besonders kompakte Abmessungen aufweist. Der Messwellenleiter soll hierbei insbesondere so ausgebildet sein, dass er an einer Bewegungsvorrichtung in Form eines Linearwälzlagers angebracht werden kann, insbesondere an dessen Führungsschiene.

Gemäß dem selbständigen Anspruch wird vorgeschlagen, dass der Messwellenleiter einen ersten und einen zweiten langgestreckten elektrischen Leiter umfasst, die unter Zwischenschaltung eines Dielektrikums voneinander getrennt sind. Wellenleiter in Form zweier langgestreckter Leiter, die durch ein Dielektrikum getrennt sind, sind beispielsweise als Zweidrahtleitung, als Koaxialkabel oder als Mikrostreifenleitung bekannt. Es ist auch bekannt, dass die Querabmessung derartiger Wellenleiter nicht durch die Wellenlänge der darin laufenden elektromagnetischen Welle vorbestimmt ist. Die bekannten Wellenleiter dieser Art haben jedoch allesamt die Eigenschaft, dass das elektromagnetische Feld der darin laufenden Welle praktisch nicht von einem abseits des Wellenleiters angeordneten Störmittel beeinflusst werden kann. Dementsprechend war nicht zu erwarten, dass mit einem derartigen Störmittel eine reflektierte Welle erzeugt werden kann, die für eine Wegmessung geeignet ist. Der Verdienst der Erfinder besteht darin, dieses Vorurteil überwunden zu haben. Es hat sich gezeigt, dass bei geeigneter Ausgestaltung des erfindungsgemäßen Wellenleiters und/oder des Störmittels ohne weiteres eine zur Wegmessung geeignete reflektierte Welle erzeugt werden kann. Die Wirkung des Störmittels ist überdies deutlich besser als bei dem bekannten Messwellenleiter in Form eines Hohlleiters.

In den abhängigen Ansprüchen sind vorteilhafte Weiterbildungen und Verbesserungen der Erfindung angegeben.

Der erste und der zweite elektrische Leiter und das Dielektrikum können im Bereich, in dem sich die elektromagnetische Welle ausbreitet, entlang der gesamten Bahn des Läufers eine im Wesentlichen konstante Querschnittsform aufweisen. Folglich existieren entlang der gesamten Bahn konstante Ausbreitungsbedingungen für die elektromagnetische Welle. Damit ist einerseits die Wellenlänge der elektromagnetischen Welle entlang der gesamten Bahn konstant, so dass die Positionsbestimmung anhand der reflektierten Welle besonders einfach ist. Gleichzeitig ist die Wechselwirkung zwischen Messwellenleiter und Störmittel an allen Stellen der Bahn im Wesentlichen gleich, so dass die Messung nicht stellungsabhängig verfälscht wird.

Der zweite elektrische Leiter kann von einer elektrisch leitenden Oberfläche der Basis gebildet sein, wobei der erste elektrische Leiter zwischen der elektrisch leitenden Oberfläche und dem Störmittel angeordnet ist, und wobei das Dielektrikum wenigstens zwischen der leitenden Oberfläche und dem ersten elektrischen Leiter in Form eines Festkörpers ausgeführt ist. Mit dieser Anordnung kann der Messwellenleiter auf besonders kostengünstige Weise bereit gestellt werden. Die Basis einer Linearbewegungsvorrichtung besteht üblicherweise aus Metall, meist Stahl oder Aluminium, und besitzt ohnehin Oberflächen, die als elektrischer Leiter geeignet sind. Für die Wellenleitung kommt es hierbei im Wesentlichen auf die Oberflächenform an, da die elektromagnetische Welle im Wesentlichen nicht in die elektrisch leitende Basis eindringt. Der erste elektrische Leiter kann problemlos mit Hilfe des festen Dielektrikums an der Basis befestigt werden, so dass der Messwellenleiter eine ausreichende mechanische Stabilität aufweist.

An dieser Stelle ist darauf hinzuweisen, dass das Dielektrikum, in dem sich die elektromagnetische Welle ausbreitet, wenigstens zu einem kleinen Teil durch die die Bewegungsvorrichtung umgebende Luft gebildet wird. Dies ist darauf zurückzuführen, dass sich die elektromagnetische Welle nicht ausschließlich in dem Raum zwischen dem ersten und dem zweiten elektromagnetischen Leiter ausbreitet. Ein Teil der Wellenenergie wird auch abseits dieses Raumes transportiert. Im Rahmen der vorliegenden Erfindung kommt es gerade darauf an, dass der letztgenannte Energieanteil besonders groß ist, damit das Störmittel die elektromagnetische Welle besonders intensiv beeinflusst, so dass eine starke reflektierte Welle entsteht.

Der erste elektrische Leiter kann eine im Wesentlichen rechteckige Querschnittsform aufweisen, wobei die elektrisch leitende Oberfläche im Bereich des ersten elektrischen Leiters eben ausgeführt ist, wobei die lange Rechteckseite im Wesentlichen parallel zur ebenen leitenden Oberfläche angeordnet ist. Hierdurch wird eine besonders feste Verbindung zwischen der Basis und dem ersten elektrischen Leiter ermöglicht. Es ist besonders bevorzugt, wenn die Breite des ersten elektrischen Leiters wenigstens 10-mal so groß wie dessen Dicke ist. Mit dieser Ausgestaltung ergibt sich ein Messwellenleiter, der eine besonders geringe Dicke aufweist, so dass er problemlos an der Oberfläche der Basis der Bewegungsvorrichtung angebracht werden kann. Insbesondere ist auf die Führungsschiene des bereits erwähnten Miniatur-Linearwälzlagers hinzuweisen, an deren Kopffläche ein derartiger Wellenleiter problemlos vorgesehen werden kann, ohne dass es zu Platzproblemen kommt. Die Breite des vorgeschlagenen Wellenleiters ist so zu wählen, dass die elektromagnetische Welle einerseits gute Ausbreitungsbedingungen vorfindet, wobei andererseits eine mechanisch ausreichend starke Befestigung des ersten elektrischen Leiters und der Basis gegeben ist.

Der erste elektrische Leiter kann eine im Wesentlichen kreisförmige Querschnittsform aufweisen, wobei die elektrisch leitende Oberfläche den ersten elektrischen Leiter im Wesentlichen U-förmig umgibt. Der erste elektrische Leiter kann beispielsweise in einer Nut der Basis angeordnet sein, die ihn U-förmig umgibt. Bei dieser Ausführungsform ist der erste elektrische Leiter besonders gut vor Umgebungseinflüssen geschützt. Die genannte Nut wird vorzugsweise vollständig mit einem Dielektrikum in Form eines Festkörpers aufgefüllt, so dass die Basis im Bereich des Wellenleiters eine im Wesentlichen ebene Oberfläche aufweist. Auch bei dieser Ausführungsform ergibt sich ein besonders kompakter Messwellenleiter. Das Störmittel ist vorzugsweise im Bereich der Öffnung der U-förmigen Oberfläche des ersten elektrischen Leiters angeordnet. In diesem Bereich wird ein erheblicher Anteil der Energie der elektromagnetischen Welle transportiert, so dass das Störmittel besonders effektiv arbeitet.

Die vorstehende Ausführungsform kommt besonders bevorzugt bei einer Bewegungsvorrichtung in Form eines Linearwälzlagers zum Einsatz, wobei die Basis in Form einer langgestreckten Führungsschiene aus Metall ausgebildet ist, die wenigstens eine an kugelförmige Wälzkörper angepasste Wälzfläche aufweist, wobei die Wälzfläche von einer Nut unterbrochen wird, die sich entlang der Wälzfläche erstreckt, und wobei die elektrische leitende Oberfläche von der Oberfläche der Nut gebildet wird. Aus dem Stand der Technik ist es bekannt, in einer Wälzfläche für kugelförmige Wälzkörper eine Nut vorzusehen. Hierzu wird beispielsweise auf Fig. 4 der EP 0 769 627 B1 verwiesen, in der die Nut mit dem Bezugszeichen 110 versehen ist. Mit dieser Nut wird üblicherweise Raum für einen Haltdraht geschaffen, der die Wälzkörper im Führungswagen hält, wenn sich letztgenannter nicht auf der Führungsschiene befindet. Diese Nut bietet ausreichend Platz für den erfindungsgemäßen Wellenleiter und kann überdies relativ einfach in einem Arbeitsgang mit den Wälzflächen hergestellt werden. Diese Ausführungsform ist daher auch sehr kostengünstig. Es ist klar, dass bei dieser Ausführungsforin der bekannte Haltedraht nicht mehr zum Einsatz kommen kann.

Der erste elektrische Leiter kann von einem Dielektrikum in Form eines Festkörpers vollständig umschlossen sein. Mit dem Dielektrikum wird der Ausbreitungsraum für die elektromagnetische Welle bereitgestellt. Bei der vorliegenden Ausführungsform dient das Dielektrikum darüber hinaus zum Schutz des ersten elektrischen Leiters vor Umgebungseinflüssen. Hierbei ist beispielsweise an Korrosionsschäden gedacht, die durch Flüssigkeiten, beispielsweise Kühlschmiermittel in Werkzeugmaschinen, hervorgerufen werden, die auf den Messwellenleiter einwirken.

Das Störmittel kann von einem gesonderten dritten elektrischen Leiter mit zwei Enden gebildet werden, wobei der dritte elektrische Leiter den ersten elektrischen Leiter quer zur Bahnrichtung überspannt, wobei seine Enden mit geringem Abstand oder in unmittelbarem elektrischen Kontakt zur elektrisch leitenden Oberfläche angeordnet sind. Mit einem derartigen Störmittel ergibt sich eine besonders intensive Störung der elektromagnetischen Welle in dem Messwellenleiter, so dass eine besonders starke reflektierte Welle entsteht. Überdies ist ein derartiges Störmittel besonders einfach und kompakt aufgebaut. Es lässt sich daher problemlos am Führungswagen eines Linearwälzlagers anbringen.

Das Störmittel kann auch von einem elektrischen Schwingkreis gebildet werden, der mit geringem Abstand zum Messwellenleiter angeordnet ist. Der Schwingkreis ist hierbei so zu gestalten, dass die Energie der elektromagnetischen Welle in diesen eingekoppelt wird, so dass der elektromagnetischen Welle an der Messstelle Energie entzogen wird. Durch diese Störung der elektromagnetischen Welle wird die reflektierte Welle erzeugt. Die Energieübertragung zwischen Störmittel und elektromagnetischer Welle ist besonders stark, wenn die Eigenfrequenz des Schwingkreises im Wesentlichen der Frequenz der elektromagnetischen Welle entspricht.

Die Basis kann einen einstückigen Hauptkörper aus Metall umfassen, an dem Befestigungsmittel vorgesehen sind, mit denen die Basis an einer untergeordneten Baugruppe befestigt werden kann, wobei der zweite elektrische Leiter von der Basis gebildet wird, insbesondere von einem Oberflächenabschnitt der Basis. Bei dem Hauptkörper kann es sich beispielsweise um eine einstückige Führungsschiene aus Stahl handeln, wobei die Befestigungsmittel von Durchgangsbohrungen gebildet werden, über welche die Führungsschiene mit der untergeordneten Baugruppe verschraubt werden kann. Es kann aber auch an den Hauptkörper eines Linearmoduls gedacht sein, der typischerweise aus Aluminium stranggepresst ist, wobei an dessen Außenseite Befestigungsnuten als Befestigungsmittel angeordnet sind. In beiden Fällen handelt es sich bei dem Hauptkörper um das Bauteil, das die Last vom Läufer auf die untergeordnete Baugruppe überträgt. Es handelt sich daher um ein massives Bauteil, das sich entlang der gesamten Bahn des Läufers erstreckt. Folglich ist es besonders gut zur Anbringung des Messwellenleiters geeignet.

Gemäß einer weiteren Ausführungsvariante der Erfindung kann die Bewegungsvorrichtung ein Linearwälzlager sein, wobei die Basis von einer langgestreckten Führungsschiene mit Befestigungsbohrungen gebildet wird, wobei die Befestigungsbohrungen mit einem Metallblech abgedeckt sind, wobei der zweite elektrische Leiter von dem Metallblech gebildet wird. Eine Führungsschiene, deren Befestigungsbohrung mit einem Metallblech abgedeckt ist, ist beispielsweise aus der EP 693 165 B2 bekannt. Das entsprechende Metallblech wird in sehr großen Längen hergestellt, wobei es erst kurz vor der Montage auf die für die vorgesehene Führungsschiene notwendig Länge abgeschnitten wird. Auf dem im Wesentlichen endlos hergestellten Metallblech kann der Messwellenleiter besonders kostengünstig in einem kontinuierlichen Verfahren aufgebracht werden.

Die Basis kann wenigstens einen Einspeisewellenleiter in Form eines Hohlleiters umfassen, welcher so benachbart zu einem Ende des Messwellenleiters angeordnet ist, dass die elektromagnetische Welle von dem Einspeisewellenleiter auf den Messwellenleiter übertragen werden kann oder umgekehrt. Es hat sich gezeigt, dass es nur schwer möglich ist, in den erfindungsgemäßen Wellenleiter eine elektromagnetische Welle definiert einzuspeisen. Insbesondere ist es nur schwer möglich ein Zuführkabel mit dem Messwellenleiter direkt zu verbinden. Bei einem Hohlleiter ist es dagegen deutlich einfacher, eine Messwelle definiert ein- und auszukoppeln. Hierzu wird auf die bereits erwähnte DE 10 2004 057 769 A1 verwiesen. Mit der vorgeschlagenen Lösung werden die Vorteile der beiden Wellenleitertypen kombiniert. Für die Übertragung der elektromagnetischen Welle vom Hohlleiter auf den Messwellenleiter reicht es aus, wenn ein offenes Ende des Hohleiters in unmittelbarer Nachbarschaft zum Messwellenleiter angeordnet ist. Eine besonders starke Kopplung ist gegeben, wenn die Mittelachsen des Hohlenwellenleiters und des Messwellenleiters im Kopplungsbereich im Wesentlichen senkrecht zueinander ausgerichtet sind.

Die Basis kann ein gesondertes Einspeiseteil umfassen, in dem der Einspeisewellenleiter wenigstens abschnittsweise angeordnet ist, wobei der Messwellenleiter lösbar mit dem Einspeiseteil verbunden ist. Die Form des Einspeiseteils ist unabhängig von der Art der Bewegungsvorrichtung und insbesondere von deren Länge. Demnach kann ein und dasselbe Einspeiseteil in einer Vielzahl von unterschiedlichen Bewegungsvorrichtungen eingesetzt werden. Es kann somit in größeren Stückzahlen kostengünstig hergestellt werden.

Die Erfindung wird im Folgenden anhand der beigefügten Zeichnungen näher erläutert. Es stellt dar:
- Fig. 1: eine perspektivische Ansicht einer erfindungsgemäßen Bewegungsvorrichtung;
- Fig. 2: einen grobschematischen Querschnitt einer ersten Ausführungsform einer erfindungsgemäßen Bewegungsvorrichtung;
- Fig. 3: einen grobschematischen Längsschnitt einer zweiten Ausführungsform einer erfindungsgemäßen Bewegungsvorrichtung; und
- Fig. 4: einen grobschematischen Querschnitt einer dritten Ausführungsform einer erfindungsgemäßen Bewegungsvorrichtung.

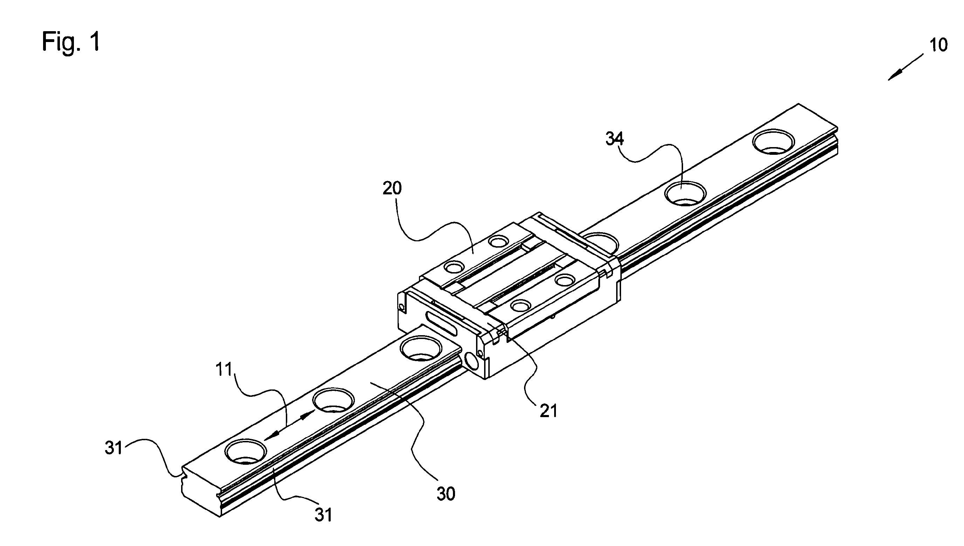

Fig. 1 zeigt eine perspektivische Ansicht einer erfindungsgemäßen Bewegungsvorrichtung 10 in Form eines Linearwälzlagers. Ein derartiges Linearwälzlager ist abgesehen von der erfindungsgemäßen Messeinrichtung aus der EP 769 627 B1 bekannt, die hiermit in vollem Umfang in Bezug genommen wird. Das Linearwälzlager 10 umfasst eine Basis 30 in Form einer Führungsschiene aus gehärtetem Wälzlagerstahl. An beiden Seitenflächen der Führungsschiene 30 ist je eine Wälzfläche 31 vorgesehen, deren Querschnittsform an kugelförmige Wälzkörper angepasst ist. Die langgestreckte Führungsschiene besitzt eine im Wesentlichen konstante Querschnittsform und definiert die Bewegungsbahn 11 für einen Läufer 20 in Form eines Führungswagens. In dem Läufer 20 sind zwei (nicht dargestellte) Reihen von endlos umlaufenden kugelförmigen Wälzkörpern vorgesehen, über die der Läufer 20 in Richtung der Bahn 11 beweglich an der Basis 30 abgestützt ist. Hinzuweisen ist noch auf die Befestigungsbohrungen 34, welche die Basis 30 durchsetzen, so dass sie an einer (nicht dargestellten) untergeordneten Baugruppe mittels (nicht dargestellter) Schraubbolzen befestigt werden kann.

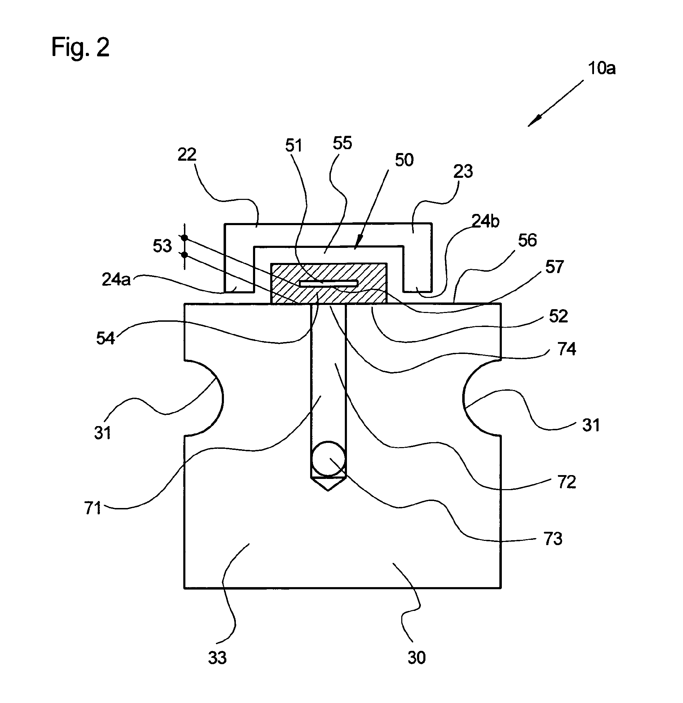

Fig. 2 zeigt einen grobschematischen Querschnitt einer ersten Ausführungsform 10a einer erfindungsgemäßen Bewegungsvorrichtung. Der Übersichtlichkeit halber wurde auf die Darstellung des Läufers verzichtet. Der erfindungsgemäße Messwellenleiter 50 ist an oder Oberseite des einstückigen Hauptkörpers 33 der Basis 30 vorgesehen. Die Basis besteht aus Stahl und ist daher elektrisch leitfähig. Ihre elektrisch leitende Oberfläche 56 bildet den zweiten elektrischen Leiter 52 des Messwellenleiters 50. Weiter ist ein erster elektrischer Leiter 51 vorgesehen, der sich mit einer konstanten rechteckigen Querschnittsform über die gesamte Länge der Basis 30 erstreckt. Der erste elektrische Leiter 51 besteht beispielsweise aus einem dünnen Metallband, insbesondere aus Kupfer oder Stahl. Die lange Rechteckseite 57 des ersten elektrischen Leiters 51 ist im Wesentlichen parallel zur ebenen elektrisch leitenden Oberfläche 56 angeordnet.

Um den ersten elektrischen Leiter 51 herum ist ein Dielektrikum in Form eines Festkörpers 54 vorgesehen. Hierbei ist insbesondere an ein Kunststoffmaterial gedacht, das elektromagnetische Wellen der gewünschten Frequenz mit geringer Dämpfung leitet. Dieses Kunststoffmaterial dient gleichzeitig zur Befestigung des ersten elektrischen Leiters 51 an dem Hauptkörper 33 der Basis 30 und zu dessen Schutz vor Umgebungseinflüssen. Der erste elektrische Leiter 51 ist mit geringem Abstand 53 parallel zur ebenen elektrisch leitenden Oberfläche 56 angeordnet. Hierbei ist der genannte Abstand 53, die Breite des ersten elektrischen Leiters 51 und das Material des Dielektrikums 54 so aufeinander abzustimmen, dass sich optimale Ausbreitungsbedingungen für die elektromagnetische Welle ergeben. Bei der Auswahl der genannten Parameter ist auch zu berücksichtigen, dass das Störmittel 22 eine genügend große Störwirkung entfaltet.

Das Störmittel 22 ist in Form eines Kurzschlussbügels ausgebildet. Es wird vorzugsweise in Form eines Metallstückes ausgeführt, das in der Umlenkbaugruppe (Nr. 21; Fig. 1) des Läufers angeordnet ist. Die Umlenkbaugruppe besteht typischerweise aus elektrisch nicht leitendem Kunststoff und ist daher für die Aufnahme des Störmittels in Form eines dritten elektrischen Leiters 23 besonders geeignet. Der dritte elektrische Leiter 23 überspannt den Messwellenleiter 50 in Querrichtung, wobei dessen beide Enden 24a; 24b entweder in unmittelbaren elektrischen Kontakt oder in geringem Abstand zur elektrisch leitenden Oberfläche 56 der Basis 30 angeordnet sind. Weiter ist der dritte elektrische Leiter 34 mit möglichst geringem Abstand zum ersten elektrischen Leiter 51 angeordnet, so dass sich eine größtmögliche Störwirkung ergibt. Der erste 51 und der dritte elektrische Leiter 23 haben hierbei keinen elektrisch leitenden Kontakt, sie sind vielmehr durch ein Dielektrikum getrennt, welches wahlweise als Festkörper 54 und/oder als Luftspalt 55 ausbildet sein kann.

Fig. 2 zeigt weiter den Einspeisewellenleiter 71, der in Form eines Hohlleiters ausgeführt ist. Hierfür ist in der Basis eine kreiszylindrische erste Bohrung 72 vorgesehen, die senkrecht zum ersten elektrischen Leiter 51 angeordnet ist, wobei deren Mündung 74 genau unterhalb das ersten elektrischen Leiters 51 vorgesehen ist, also genau in dem Bereich, in dem die elektromagnetische Welle die größte Leistungsdichte aufweist. Somit ist eine optimale Kopplung zwischen Einspeisewellenleiter 71 und Messwellenleiter 50 gegeben.

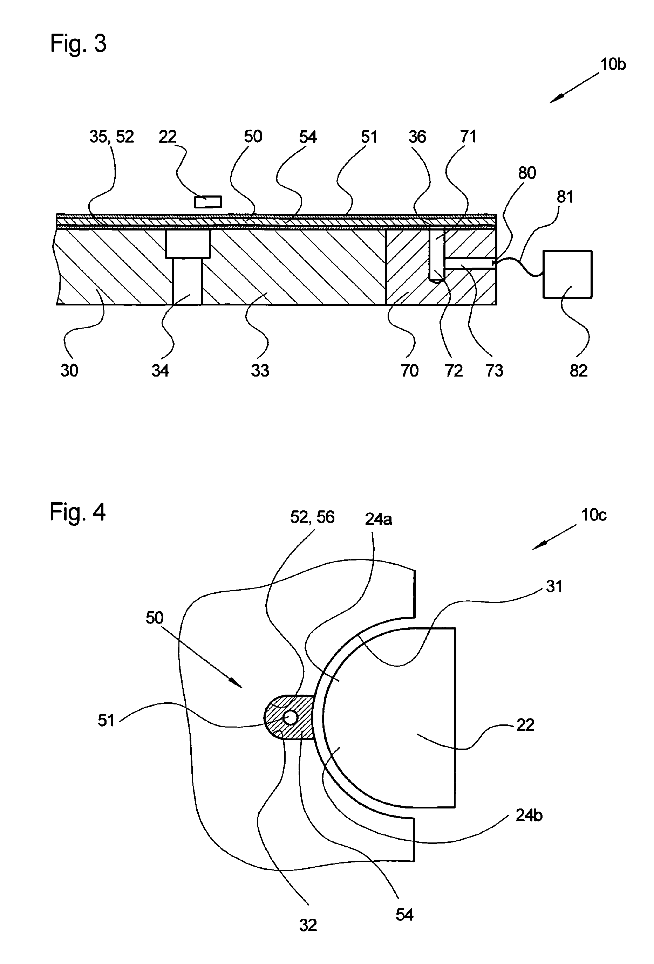

Fig. 3 zeigt eine zweite Ausführungsform 10b einer erfindungsgemäßen Bewegungsvorrichtung, die sich von der ersten Ausführungsform nur dadurch unterscheidet, dass der Messwellenleiter 50 an einem gesonderten Metallblech 35 und nicht unmittelbar an dem Hauptkörper 33 der Basis 30 befestigt ist. Die mit Bezug auf Fig. 2 gemachten Ausführungen gelten somit, mit Ausnahme der genannten Abweichung, auch für die zweite Ausführungsform 10b der Bewegungsvorrichtung gemäß der Fig. 3.

Bei dem Metallblech 35 handelt es sich um das aus der EP 693 165 B2 Abdeckband, das in erster Linie zum Verschluss der Befestigungsbohrungen 34 der Basis 30 dient. Die EP 693 165 B2 wird dementsprechend in vollem Umfang in Bezug genommen und zum Inhalt der vorliegenden Anmeldung gemacht. Bei dem Metallband 35 handelt es sich um ein Federstahlblech, das über zwei abgewinkelte Seitenabschnitte in Hinterschneidungen der Basis 30 eingeschnappt ist, so dass es lösbar an dieser befestigt ist. Der erste elektrische Leiter 51 ist in der gleichen Weise am Metallblech 35 befestigt, wie bei der ersten Ausführungsform 10b der Bewegungsvorrichtung an dem Hauptkörper 33 der Basis 30. Der zweite elektrische Leiter 52 wird von dem Metallblech 35 gebildet.

Gemäß Fig. 3 erstreckt sich das Metallblech 35 mit dem Messwellenleiter 50 über den Hauptkörper 33 der Basis 30 und ein an dessen Ende befestigtes, gesondertes Einspeiseteil 70. Das Einspeiseteil 70 besitzt im Wesentlichen die gleiche Querschnittsform wie der Hauptkörper 33, so dass das Metallblech 35 auch in diesen lösbar eingeschnappt werden kann. In dem Einspeiseteil 70 ist der Einspeisewellenleiter 71 in Form einer ersten 72 und einer zweiten Bohrung 73 vorgesehen, wobei die zweite Bohrung 73 im rechten Winkel in die erste Bohrung 72 einmündet. Ein Durchbruch 36 in dem Metallblech 35 ermöglicht es, dass die elektromagnetische Welle von der ersten Bohrung 72 in den Messwellenleiter 50 übertreten kann. Die zweite Bohrung 73 des Einspeisewellenleiters 71 endet an der freien Stirnseite des Einspeiseteils 70, wobei an dieser Stelle eine Ein-/Auskopplungsvorrichtung 80 vorgesehen ist, die über ein HF-Kabel 81 mit einer Auswertevorrichtung 82 verbunden ist. Die Auswertevorrichtung 82 erzeugt die für die Positionsbestimmung notwendigen elektromagnetischen Wellen und wertet die reflektierten Wellen gemäß dem eingangs erwähnten Verfahren aus. Bei einer bevorzugten Ausführungsform ist der HF-Teil der Auswertevorrichtung 82 in Form eines integrierten Schaltkreises in dem Einspeiseteil 70 integriert angeordnet, so dass teure und störanfällige HF-Kabelstrecken 81 entfallen können.

An dem dem Einspeiseteil 70 abgewandten Ende des Messwellenleiters 50 kann eine Absorptionsvorrichtung für die elektromagnetische Welle angeordnet sein, so dass dort keine reflektierte Welle entsteht, die sich mit der reflektierten Welle, die durch das Störmittel 22 verursacht wird, überlagert.

Fig. 4 zeigt eine dritte Ausführungsform 10c einer erfindungsgemäßen Bewegungsvorrichtung. Dargestellt ist ein Querschnitt im Bereich der Wälzfläche (Nr. 31; Fig. 1). Am Grund der Wälzfläche 31 ist eine Nut 32 vorgesehen, deren elektrisch leitende Oberfläche 56 den zweiten elektrischen Leiter 52 bildet. In der Nut 32 ist ein dünner Draht mit kreisförmigem Querschnitt als erster elektrischer Leiter 51 aufgenommen, derart, dass die Nut 32 den ersten elektrischen Leiter 51 U-förmig umgibt. Der erste elektrische Leiter 51 wird in der Nut 32 von einem Kunststoffmaterial in der gewünschten Position gehalten, welches gleichzeitig das Dielektrikum 54 bildet, in dem sich die elektromagnetische Welle ausbreitet. Das Störmittel 22 wird von einem Metallblech gebildet, welches eine an die Querschnittsform der Wälzfläche 31 angepasste Außenkontur aufweist und mit geringem Abstand zu dieser angeordnet ist. Dieses Störmittel 22 arbeitet ebenfalls nach dem oben beschriebenen Prinzip des Kurzschlussbügels.

Alternativ kann ein Störmittel in Form eines elektrischen Schwingkreises vorgesehen sein, also die Zusammenschaltung eines Kondensators mit einer elektrischen Spule. Diese Baugruppe ist mit möglichst geringem Abstand zum Messwellenleiter 50 anzuordnen, damit sich eine möglichst große Störwirkung ergibt. Bei der Ausführungsform gemäß Fig. 4 kann aber auch ganz auf ein gesondertes Störmittel 22 verzichtet werden, da bereits die auf der Wälzfläche laufenden Kugeln des Linearwälzlagers als Störmittel wirken. Diese wirken ebenfalls nach dem Prinzip des Kurzschlussbügels.

### Bezugszeichenliste

- 10: Bewegungsvorrichtung
- 10a: Bewegungsvorrichtung (erste Ausführungsform)
- 10b: Bewegungsvorrichtung (zweite Ausführungsform)
- 10c: Bewegungsvorrichtung (dritte Ausführungsform)
- 11: Bahn

- 20: Läufer
- 21: Umlenkbaugruppe
- 22: Störmittel
- 23: dritter elektrischer Leiter
- 24a: erstes Ende des dritten elektrischen Leiters
- 24b: zweites Ende des dritten elektrischen Leiters

- 30: Basis
- 31: Wälzfläche
- 32: Nut
- 33: Hauptkörper
- 34: Befestigungsbohrung
- 35: Metallblech
- 36: Durchbruch

- 50: Messwellenleiter
- 51: erster elektrischer Leiter
- 52: zweiter elektrischer Leiter
- 53: Abstand zwischen erstem und zweitem elektrischen Leiter
- 54: Dielektrikum in Form eines Festkörpers
- 55: Luftspalt
- 56: elektrisch leitende Oberfläche
- 57: lange Rechteckseite

- 70: Einspeiseteil
- 71: Einspeisewellenleiter
- 72: erste Bohrung
- 73: zweite Bohrung
- 74: Mündung

- 80: Ein-/Auskopplungsvorrichtung
- 81: HF-Kabel
- 82: Auswertevorrichtung

## Patentansprüche

1. Bewegungsvorrichtung (10; 10a; 10b; 10c) mit einer Basis (30) und einem Läufer (20), der entlang einer vorgegebenen Bahn (11) an der Basis (30) beweglich geführt ist, wobei an der Basis (30) ein langgestreckter Messwellenleiter (50) vorgesehen ist, der eine elektromagnetische Welle geführt leiten kann, wobei der Messwellenleiter (50) entlang der Bahn (11) verläuft und wobei an dem Läufer (20) wenigstens ein Störmittel (22) vorgesehen ist, welches die elektromagnetische Welle in dem Messwellenleiter (50) so beeinflussen kann, dass sie im Bereich des Störmittels (22) wenigstens teilweise reflektiert wird,
**dadurch gekennzeichnet, dass** der Messwellenleiter (50) einen ersten und einen zweiten langgestreckten elektrischen Leiter (51; 52) umfasst, die unter Zwischenschaltung eines Dielektrikums (54) voneinander getrennt sind.

2. Bewegungsvorrichtung (10; 10a; 10b; 10c) nach Anspruch 1,
**dadurch gekennzeichnet, dass** der erste und der zweite elektrische Leiter (51; 52) und das Dielektrikum (54) im Bereich, in dem sich die elektromagnetische Welle ausbreitet, entlang der gesamten Bahn (11) des Läufers (20) eine im Wesentlichen konstante Querschnittsform aufweisen.

3. Bewegungsvorrichtung (10; 10a; 10b; 10c) nach einem der vorstehenden Ansprüche,
**dadurch gekennzeichnet, dass** der zweite elektrische Leiter (52) von einer elektrisch leitenden Oberfläche (56) der Basis (30) gebildet wird, wobei der erste elektrische Leiter (51) zwischen der elektrisch leitenden Oberfläche (56) und dem Störmittel (22) angeordnet ist, und wobei das Dielektrikum wenigstens zwischen der leitenden Oberfläche (56) und dem ersten elektrischen Leiter (51) in Form eines Festkörpers (54) ausgeführt ist.

4. Bewegungsvorrichtung (10; 10a; 10b) nach Anspruch 3, vorzugsweise rückbezogen auf Anspruch 2,
**dadurch gekennzeichnet, dass** der erste elektrische Leiter (51) eine im Wesentlichen rechteckige Querschnittsform aufweist, wobei die elektrisch leitende Oberfläche (56) im Bereich des ersten elektrischen Leiters eben ausgeführt ist, wobei die lange Rechteckseite (57) im Wesentlichen parallel zur ebenen leitenden Oberfläche (56) angeordnet ist.

5. Bewegungsvorrichtung (10; 10c) nach Anspruch 3,
**dadurch gekennzeichnet, dass** der erste elektrische Leiter (51) eine im Wesentlichen kreisförmige Querschnittsform aufweist, wobei die elektrisch leitende Oberfläche (56) den ersten elektrischen Leiter (51) im Wesentlichen U-förmig umgibt.

6. Bewegungsvorrichtung (10; 10c) nach Anspruch 5,
**dadurch gekennzeichnet, dass** die Bewegungsvorrichtung (10c) ein Linearwälzlager ist, wobei die Basis (30) in Form einer langgestreckten Führungsschiene aus Metall ausgebildet ist, die wenigstens eine an kugelförmige Wälzkörper angepasste Wälzfläche (31) aufweist, wobei die Wälzfläche (31) von einer Nut (32) unterbrochen wird, die sich entlang der Wälzfläche (31) erstreckt, und wobei die elektrisch leitende Oberfläche (56) von der Oberfläche der Nut (32) gebildet wird.

7. Bewegungsvorrichtung (10; 10a; 10b; 10c) nach einem der vorstehenden Ansprüche,
**dadurch gekennzeichnet, dass** der erste elektrische Leiter (51) von einem Dielektrikum in Form eines Festkörpers (54) vollständig umschlossen ist.

8. Bewegungsvorrichtung (10; 10a; 10b; 10c) nach einem der vorstehenden Ansprüche,
**dadurch gekennzeichnet, dass** das Störmittel (22) von einem gesonderten dritten elektrischen Leiter (23) mit zwei Enden (24a; 24b) gebildet wird, wobei der dritte elektrische Leiter (23) den ersten elektrischen Leiter (51) quer zur Bahnrichtung (11) überspannt, wobei seine Enden (24a; 24b) mit geringem Abstand oder in unmittelbarem elektrischen Kontakt zur elektrisch leitenden Oberfläche (56) angeordnet sind.

9. Bewegungsvorrichtung nach einem der vorstehenden Ansprüche,
**dadurch gekennzeichnet, dass** das Störmittel von einem elektrischen Schwingkreis gebildet wird, der mit geringem Abstand zum Messwellenleiter angeordnet ist.

10. Bewegungsvorrichtung (10; 10a; 10c) nach einem der vorstehenden Ansprüche,
**dadurch gekennzeichnet, dass** die Basis (30) einen einstückigen Hauptkörper (33) aus Metall umfasst, an dem Befestigungsmittel (34) vorgesehen sind, mit denen die Basis (30) an einer untergeordneten Baugruppe befestigt werden kann, wobei der zweite elektrische Leiter (52) von der Basis (30) gebildet wird, insbesondere von einem Oberflächenabschnitt (56) der Basis (30).

11. Bewegungsvorrichtung (10; 10b) nach einem der Ansprüche 1 bis 9,
**dadurch gekennzeichnet, dass** die Bewegungsvorrichtung (10; 10b) ein Linearwälzlager ist, wobei die Basis (30) von einer langgestreckten Führungsschiene mit Befestigungsbohrungen (34) gebildet wird, wobei die Befestigungsbohrungen (34) mit einem Metallblech (35) abgedeckt sind, wobei der zweite elektrische Leiter (52) von dem Metallblech (35) gebildet wird.

12. Bewegungsvorrichtung (10; 10a; 10b; 10c) nach einem der vorstehenden Ansprüche,
**dadurch gekennzeichnet, dass** die Basis (30) wenigstens einen Einspeisewellenleiter (71) in Form eines Hohlleiters umfasst, welcher so benachbart zu einem Ende des Messwellenleiters (50) angeordnet ist, dass die elektromagnetische Welle von dem Einspeisewellenleiter (71) auf den Messwellenleiter (50) übertragen werden kann oder umgekehrt.

13. Bewegungsvorrichtung (10; 10; 10b; 10c) nach Anspruch 12,
**dadurch gekennzeichnet, dass** die Basis (30) ein gesondertes Einspeiseteil (70) umfasst, in dem der Einspeisewellenleiter (71) wenigstens abschnittsweise angeordnet ist, wobei der Messwellenleiter (50) lösbar mit dem Einspeiseteil (71) verbunden ist.
